# EUROPEAN PATENT APPLICATION

(11) **EP 1 124 064 A1**
(43) Date of publication of application: **16.08.2001**
(21) Application number: 00300985.9
(22) Date of filing: 09.02.2000
(51) Int. Cl.: F16B 27/00, F16B 15/08

(54) **Feed structure for fasteners and method for deploying said fasteners**

(71) Applicant: Chen, Sen-Yang, Kaohsiung City, Taiwan (TW)
(72) Inventor: Chen, Sen-Yang, Kaohsiung City, Taiwan (TW)
(74) Representative: Moir, Michael Christopher

(57) **Abstract**

A screw feed belt (3) is used to hold a plurality of screws (4) and includes a flexible elongated strap (30) formed with a plurality of spaced-apart and aligned openings (32), each of which is defined by an annular confining wall (320). Positioning rings (33) are disposed respectively in the openings (32), and have an inner periphery (34) that defines a positioning hole (340) for extension of the shank portion (40) of one of the screws (4) and for frictional contact with the shank portion (40), and an outer periphery (36) surrounded by and spaced-apart from the confining wall (320) of the respective opening (32). The positioning hole (340) is smaller than the head portion (41) of the screws (4) so that the latter can rest on the positioning ring (33) when the screw (4) extends through the positioning hole (340). A plurality of connecting ribs (35) extend radially and integrally between the outer periphery (36) of a respective positioning ring (33) and the confining wall (320) of a corresponding opening (32), and are breakable to permit the respective positioning ring (33) and the screw (4) that extends through the latter to separate from the strap (30) when the screw (4) is rotated axially.

## Description

This invention relates to a feed belt for screws or other fasteners having a head and a shaft, and more particularly to a screw feed belt which simplifies the screw driving operation by obviating the need for sleeving washers on screws.

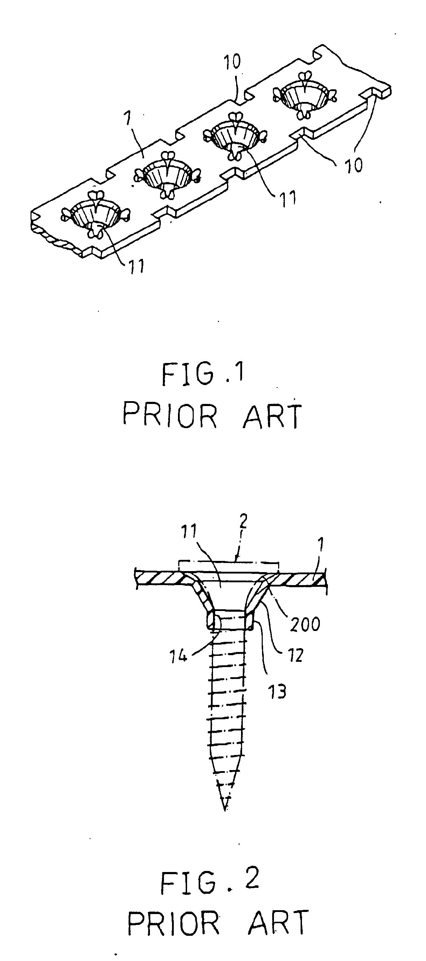

A screw feed belt has been used for gathering and holding a plurality of screws to facilitate the screw driving operation. Figure 1 illustrates a conventional screw feed belt 1 which includes an elongated strap formed with a plurality of pairs of guiding notches 10 on two longitudinal sides thereof, and a plurality of aligned and spaced positioning holes 11 to permit extension of the shank portions of screws 2 (only one is shown in Figure 2) therethrough. As shown in Figure 2, each of the positioning holes 11 is defined by a tapering first annular wall 12 that converges downwardly, and a second annular wall 13 that extends downwardly from the first annular wall 12. The second annular wall 13 has an inner surface formed with a radial inwardly projecting rim 14. When the screw 2 extends into one of the positioning holes 11, the screw thread formed on the shank portion of the screw 2 engages the rim 14 for positioning the screw 2 in the positioning hole 11.

However, the conventional screw feed belt 1 is only suitable for holding a screw that has a tapered head portion 200 and that does not require a washer for use therewith. When another type of screw that requires a washer is to be operated, a plurality of the washers must be sleeved one by one on the screws before the screws are held on the screw feed belt 1. This complicates the screw driving operation.

Therefore an object of at least the preferred embodiment of the present invention is to provide a screw feed belt which simplifies the screw driving operation.

In one aspect the present invention provides a feed structure for a plurality of fasteners having a shaft and a head, the feed structure comprising
a support structure; and
a plurality of washers for holding the fasteners, wherein the washers are detachably carried by the support structure.

In another aspect the present invention provides a method of deploying fasteners having a shaft and a head by using a feed structure comprising a support structure and a plurality of washers for holding the fasteners, the washers being detachably carried by the support structure, the method comprising
inserting the shafts of the fasteners into respective ones of the washers;
deploying the fasteners; and
separating the washers from the support structure during said deployment.

In a preferred embodiment, the screw feed belt of the present invention is adapted for holding a plurality of screws and includes an elongated strap, a plurality of positioning rings, and a plurality of connecting ribs.

The elongated strap is made of a flexible material, and is formed with a plurality of spaced-apart and aligned openings, each of which is defined by an annular confining wall. The positioning rings are disposed respectively in the openings. Each of the positioning rings has an inner periphery that defines a positioning hole adapted to permit extension of the shank portion of one of the screws therethrough and adapted to be in frictional contact with the shank portion of said one of the screws, and an outer periphery which is surrounded by and which is spaced-apart from the confining wall of the respective one of the openings. The positioning hole has a size smaller than the head portion of the screws so that the positioning ring is adapted to permit the head portion of said one of the screws to rest thereon when said one of the screws extends through the positioning hole. The connecting ribs extend radially and integrally between the outer periphery of a respective one of the positioning rings and the confining wall of the respective one of the openings. The connecting ribs are breakable to permit the respective one of the positioning rings and the screw that extends through the respective one of the positioning rings to separate from the elongated strap. The inner periphery of each of the positioning rings is formed with a plurality of radial inward retaining protrusions which are adapted to contact frictionally the shank portion of said one of the screws that is extended through the positioning hole.

Preferred features of the present invention will now be described, by way of example only, with reference to the accompanying drawings, in which:-
Figure 1 is a fragmentary perspective view of a conventional screw feed belt;
Figure 2 is a fragmentary sectional view of the conventional screw feed belt;
Figure 3 is a fragmentary perspective view of a first preferred embodiment of a screw feed belt according to the present invention;
Figure 4 is a fragmentary schematic top view of the first preferred embodiment;
Figure 5 is a fragmentary sectional view of the first preferred embodiment; and
Figure 6 is a fragmentary schematic top view of a second preferred embodiment of the screw feed belt according to the present invention.

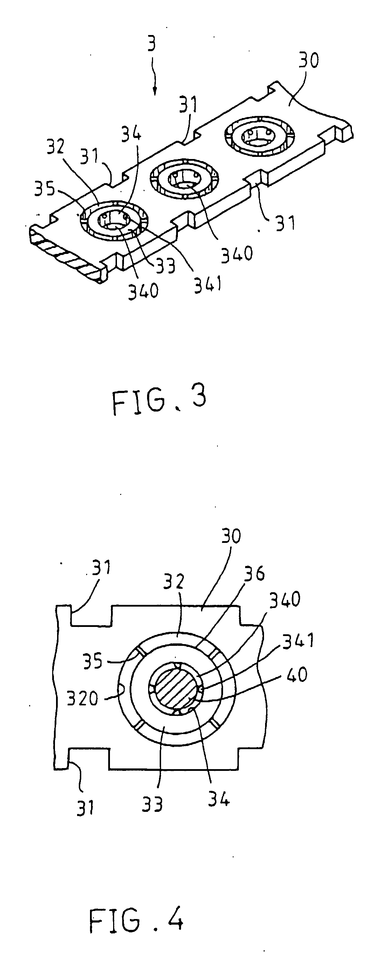

Referring to Figures 3 to 5, the first preferred embodiment of the screw feed belt 3 according to the present invention is shown to include an elongated strap 30 which is formed from a flexible material, such as plastic, and which is formed with a plurality of pairs of guiding notches 31 at longitudinal sides thereof, and a plurality of spaced-apart and aligned openings 32 along the length thereof. Each of the openings 32 is circular in shape and is defined by an annular confining wall 320. A plurality of positioning rings 33 are disposed respectively in the openings 32. Each of the positioning rings 33 has an inner periphery 34 that defines a circular positioning hole 340 to permit extension of the shank portion 40 of a screw 4 therethrough, and an outer periphery 36 that is surrounded by and that is radially spaced-apart from the confining wall 320 of the corresponding opening 32. Each of the positioning holes 340 has a size smaller than the head portion 41 of the screw 4 such that the head portion 41 can rest on the respective positioning ring 33 when the shank portion 40 extends through the respective positioning hole 340. Preferably, the positioning rings 33 are smaller than the head portion 41 of the screws 4. The inner periphery 34 of each of the positioning rings 33 is formed with a plurality of radially inward retaining protrusions 341 which are adapted to contact frictionally the shank portion 40 of the screw 4 that is extended through the positioning hole 340. A plurality of connecting ribs 35 extend radially and integrally between the outer periphery 36 of a respective one of the positioning rings 33 and the confining wall 320 of the corresponding opening 32.

In use, the shank portion 40 of the screw 4 is extended through the positioning hole 340 of one of the positioning rings 33 such that the head portion 41 rests on the positioning ring 33. The shank portion 40 can contact frictionally the protrusions 341 for retention on the screw feed belt 3. The connecting ribs 35 have a strength sufficient to support the weight of the screw 4 on the positioning ring 33 without breaking.

When a screw driving machine (not shown), such as an electric drill, is operated to drive axial rotation of the screw 4, the connecting ribs 35 break to permit the respective positioning ring 33 and the screw 4 that extends through the respective positioning ring 33 to separate from the elongated strap 30. The positioning ring 33 is thus sleeved on the shank portion 40 of the screw 4 adjacent to the head portion 41 to serve as a washer for the screw 4. Therefore, the additional step of sleeving a washer on the screw 4 in advance of the driving operation can be obviated.

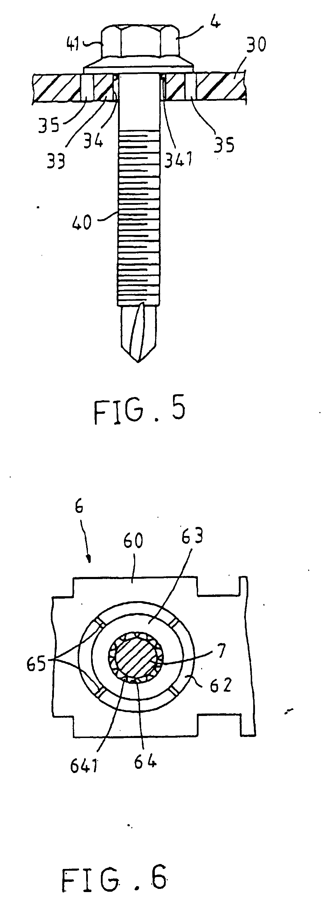

Referring to Figure 6, the screw feed belt 6 of the second preferred embodiment according to the present invention also includes an elongated strap 60 formed with a plurality of spaced-apart and aligned openings 62, a plurality of positioning rings 63 disposed respectively in the openings 62 to define a plurality of positioning holes 64 therein, and a plurality of radial connecting ribs 65 extending between an outer periphery of a respective one of the positioning rings 63 and an annular confining wall of the respective opening 62. The screw feed belt 6 differs from the screw feed belt 3 of the previous embodiment in that the inner periphery of each of the positioning rings 63 is formed with a plurality of teeth 641 that extend into the positioning hole 64 for contacting frictionally the shank portion of a screw 7 so as to retain the screw 7 on the screw feed belt 6.

The screw feed belt 3, 6 of the present invention is suitable for holding screws 4, 7, such as roofing screws, that require washers. Since the positioning ring 33, 63 is sleeved on the shank portion of the screw 4, 7 when the positioning ring 33, 63 separates from the elongated strap 30, 60 due to the driving operation of the screw driving machine on the screw 4,7, an additional washer sleeving operation can be obviated.

As used in the claims, the term "fastener having a shaft and a head" is not intended to be limited to screws but includes, inter alia, nails and rivets.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features. In particular, any of the features of Claim 7 may be incorporated separately in Claim 1. Further, corresponding method features may be incorporated separately in Claim 6.

The text of the abstract filed herewith is repeated here as part of the specification.

A screw feed belt (3) is used to hold a plurality of screws (4) and includes a flexible elongated strap (30) formed with a plurality of spaced-apart and aligned openings (32), each of which is defined by an annular confining wall (320). Positioning rings (33) are disposed respectively in the openings (32), and have an inner periphery (34) that defines a positioning hole (340) for extension of the shank portion (40) of one of the screws (4) and for frictional contact with the shank portion (40), and an outer periphery (36) surrounded by and spaced-apart from the confining wall (320) of the respective opening (32). The positioning hole (340) is smaller than the head portion (41) of the screws (4) so that the latter can rest on the positioning ring (33) when the screw (4) extends through the positioning hole (340). A plurality of connecting ribs (35) extend radially and integrally between the outer periphery (36) of a respective positioning ring (33) and the confining wall (320) of a corresponding opening (32), and are breakable to permit the respective positioning ring (33) and the screw (4) that extends through the latter to separate from the strap (30) when the screw (4) is rotated axially.

## Claims

1. A feed structure for a plurality of fasteners having a shaft and a head, the feed structure comprising
a support structure; and
a plurality of washers for holding the fasteners, wherein the washers are detachably carried by the support structure.

2. A structure as claimed in Claim 1, wherein the washers are attached to the support structure by breakable elements.

3. A structure as claimed in Claim 1, wherein the breakable elements are ribs extending radially of the washers.

4. A structure as claimed in any preceding claim, wherein the washers comprise means for retaining fasteners therein.

5. A structure as claimed in any preceding claim, wherein the support structure is an elongated strap.

6. A method of deploying fasteners having a shaft and a head by using a feed structure comprising a support structure and a plurality of washers for holding the fasteners, the washers being detachably carried by the support structure, the method comprising
inserting the shafts of the fasteners into respective ones of the washers;
deploying the fasteners; and
separating the washers from the support structure during said deployment.

7. A screw feed belt (3) for holding a plurality of screws (4), each having a shank portion (40) and a head portion (41) on one end of the shank portion (40), said screw feed belt (3) including an elongated strap (30),
characterized by:
said strap (30) being made of a flexible material and being formed with a plurality of spaced-apart and aligned openings (32), each of which is defined by an annular confining wall (320) ;
a plurality of positioning rings (33) disposed respectively in said openings (32), each of said positioning rings (33) having an inner periphery (34) that defines a positioning hole (340) adapted to permit extension of the shank portion (40) of one of the screws (4) and that is adapted to be in frictional contact with the shank portion (40) of said one of the screws (4), and an outer periphery (36) which is surrounded by and which is radially spaced-apart from said confining wall (320) of the respective one of said openings (32), said positioning hole (340) having a size smaller than the head portion (41) of the screws (4) so that said positioning ring (33) is adapted to permit the head portion (41) of said one of the screws (4) to rest thereon when said one of the screws (4) extends through said positioning hole (340); and
a plurality of connecting ribs (35) which extend radially and integrally between said outer periphery (36) of a respective one of said positioning rings (33) and said confining wall (320) of a corresponding one of said openings (32), said connecting ribs (35) being breakable to permit the respective one of said positioning rings (33) and the screw (4) that extends through the respective one of said positioning rings (33) to separate from said strap (30);
said inner periphery (34) of each of said positioning rings (33) being formed with a plurality of radial inward retaining protrusions (341) which are adapted to contact frictionally the shank portion (40) of said one of the screws (4) that is extended through said positioning hole (340).
